# EUROPEAN PATENT APPLICATION

(11) **EP 1 818 172 A1**
(43) Date of publication of application: **15.08.2007**
(21) Application number: 05781356.0
(22) Date of filing: 01.09.2005
(51) Int. Cl.: B32B 27/36, B65D 65/40, B65D 65/46, B65D 85/50

(54) **MULTILAYERED POLYGLYCOLIC-ACID-RESIN SHEET**

(30) Priority: 08.09.2004 JP 2004261550
(71) Applicant: Kureha Corporation, Tokyo 103-8552 (JP)
(72) Inventor: YAMANE, Kazuyuki c/o research Center, Kureha Corp., Iwaki-Shi, Fukushima 974-8686 (JP); KAWAKAMI, Yukichika, Iwaki-shi, Fukushima 974-8222 (JP); HOKARI, Yuki c/o research Center, Kureha Corp., Iwaki-Shi, Fukushima 974-8686 (JP)
(74) Representative: de Lang, Robbert-Jan
(86) International application number: PCT/JP2005/016038
(87) International publication number: WO 2006/028000

(57) **Abstract**

A polyglycolic acid resin-based multilayer sheet is formed by laminating a biological polymer substrate sheet and a polyglycolic acid resin with each other via an aqueous adhesive layer. The multilayer sheet is formed of biodegradable materials as a whole and allows recovery of paper, etc. alone, as desired, by preferential decomposition of the resin, thus being suitable as a packaging material stock for food container, etc.

## Description

### TECHNICAL FIELD

The present invention relates to a paper-like multilayer sheet suitable for use as a material for cups used for food and beverages, such as coffee, soup, Miso-soup, tea, laver, snack candies and noodles, or a material for trays used for pizza, daily dishes, foods for microwave oven, etc.

### BACKGROUND ART

Multilayer sheets formed by laminating a synthetic resin onto substrate materials, such as paper and cloth, which are biological (or living thing-originated) natural polymer materials, are used for various purposes. (Herein, such substrate materials including paper and materials having like properties are inclusively referred to as "biological polymer substrate (sheets)".)

For example, paper-made containers, such as paper cups and paper trays, used for food and beverages have been formed by laminating a polyolefin composition as a water-repellent or an oil-repellent layer onto at least one side of a paper-like substrate containing contents, such as liquids or oily food.

In conventional processes for producing materials for paper-made containers, such as paper cups or paper trays, the lamination has to be performed at high temperatures of 300°C or higher in order to ensure close contact and adhesion of the polyolefin composition as a water-repellent or an oil-repellent layer with paper. Accordingly, the polyolefin is degraded by oxidation to result in residual odor due to the oxidation degradation of the resin composition in the paper laminate, and generation of smoke in a large quantity in the lamination step, leading to problems, such as deterioration of the operation environment and pollution of the surrounding environment.

The paper cups, paper trays, etc., after the use cannot be decomposed even embedded in the earth to pollute the environment because of the lamination of polyolefin composition lacking degradability with microorganisms or hydrolyzability. Accordingly, a composition for a water-repellent layer or an oil-repellent layer capable of biological degradation along with paper has been intensely demanded.

For complying with such demands, various proposals have been made regarding food containers which comprise a multilayer sheet obtained by forming a various biodegradable resin layer on a paper-like substrate and result in little load to the environment at the time of disposal thereof. For example, there have been proposed a laminate material formed by melt-extrusion coating of an aliphatic polyester resin comprising a glycol and an aliphatic polycarboxylic acid onto a substrate (Patent document 1 listed below), a laminate material formed by melt-pressing or application of an organic solution of polylactic acid or a copolymer thereof onto a substrate (Patent document 2 below), a laminate material formed by adhesion with an adhesive such as gelatin, melt-pressing or application of an organic solution of polylactic acid or a copolymer of lactic acid and an oxycarboxylic acid (Patent document 3 below), and a laminate material formed by hot lamination of an ester-type biodegradable resin with a polyester-based adhesive onto a substrate (Patent document 4 below).

On the other hand, food containers are required to show a function of preventing degradation of food contents during storage thereof due to permeation of oxygen or moisture. For imparting the property to paper-based food containers, it has been proposed to dispose a barrier layer of special polymethallyl alcohol on a paper-like substrate (Patent document 5 shown below), but in this case, the product is not likely to be a biodegradable container. Further, lamination of an aluminum foil has been also practiced, whereas also in this case, the resultant container cannot be biodegradable but results in poor recyclability.
Patent document 1: JP-A 6-171050,
Patent document 2: JP-A 4-334448,
Patent document 3: JP-A 4-336246,
Patent document 4: JP-A 6-316042,
Patent document 5: JP-A 11-91016.

### DISCLOSURE OF INVENTION

Accordingly, a principal object of the present invention is to provide a multilayer sheet with biodegradability and good barrier property by laminating a biodegradable resin layer onto a paper-like substrate.

The present inventors proceeding with application and development of polyglycolic acid resin had arrived, from some earlier time, at a concept that it would be effective to laminate a polyglycolic acid resin layer having excellent barrier property onto a paper-like substrate in order to accomplish the above-mentioned object. However, polyglycolic acid resin is a high-melting point resin having a melting point of at least 200°C, which leads to a problem that the hot lamination (as disclosed in the above Patent documents 1 - 3) of the resin onto a paper-like substrate is difficult. Nevertheless, the formation of an adhesive layer by application using an organic solvent as taught by Patent documents 2 - 4 above, on the other hand, leaves a problem of residual solvent and is not desirable for provision of a food container-forming material.

Further, as a result of study of the present inventors, though polyglycolic acid resin shows a strong chemical resistance, it does not show good adhesiveness with an organic solvent-type adhesive (e.g., a well-known adhesive of "CEMEDINE C" (that is an organic solvent mixture of cellulose and vinyl acetate resin) made by Cemedine Co.). In contrast thereto, the use of an aqueous adhesive as disclosed by Patent document 3 above with respect to polylactic acid (derivative) is free from problem from the viewpoint of food sanitation and the use thereof for adhesion of a polyglycolic acid resin layer onto a substrate is expected. However, in order for a polyglycolic acid resin to exhibit a good barrier property, it has to contain a high proportion of at least 70 wt.% (up to 100 wt.%) of OCH₂CO-recurring unit therein, but such a polyglycolic acid resin is highly hydrolyzable, and the production of a laminate material by adhesion of the resin with an aqueous adhesive has been believed to be practically impossible. However, as a result of further study of the present inventors, it has become possible to provide such a polyglycolic acid resin with an appropriate level of moisture resistance and good adhesion of the resin with an aqueous adhesive has been also confirmed, so that the development of a laminate material including the resin by use of an aqueous adhesive has become possible.

Based on the above findings, according to the present invention), there is provided a polyglycolic acid resin-based multilayer sheet, comprising a biological polymer substrate sheet and a polyglycolic acid resin layer laminated with each other via an aqueous adhesive layer.

### BEST MODE FOR PRACTICING THE INVENTION

Hereinbelow, the present invention will be described more specifically with reference to preferred embodiments thereof.

### (Biological polymer substrate sheet)

The polyglycolic acid resin-based multilayer sheet according to the present invention is formed from a biological polymer substrate sheet which is similar to the above-mentioned paper-like substrate. Preferred examples thereof may include: so-called paper formed of entangled plant fiber and, in addition thereto, sheets formed of natural polymers originated from living things or derivatives thereof and also pulp-mold sheet formed by binding pulp with a binder of such resin.

More specifically, examples of so-called paper may include: Japanese paper, plain paper, kraft paper, art paper, coated paper, Indian paper, paper board, corrugated paper board, cup paper, and ivory paper, and any of these can be used. It is also possible to use re-cycled paper inclusive of one reproduced from the paper used in the present invention. In view of the use as a food container-forming material, it is preferred to use paper having a basis weight of 5 - 500 g/m², particularly 20 - 300 g/m².

The natural polymers of plant origin can further include: celluloses, such as cellulose and hemicellulose, abundantly contained in timber or lumber, wood and grass; various starches formed of amylose and amylopectin combined with each other in various proportions, other polysaccharides; lignins; and chemically modified derivatives of polysaccharides and lignins, such as cellulose acetate. Further, animal starches such as glycogen, and animal polysaccharides inclusive of chitins such as chitin and chitosan, can also be used singly or in combination with a natural polymer of plant origin. Sheet products of such natural polymers may include a starch resin sheet as a representative example and also a commercially available product such as a sheet-form product of chitosan-derivative resin ("DOLON CC", made by Aicello Kagaku K.K.).

Such a sheet product of natural polymer resin can be used singly as a biological polymer substrate sheet in the present invention and also in the form of a biological polymer substrate sheet laminated with paper as described above. Further, the polyglycolic acid resin-based multilayer sheet of the present invention can be used as it is or after removal therefrom of the polyglycolic acid resin by application of moisture, immersion in water, washing with alkaline water, etc., as a biological polymer substrate sheet, or in the form of a sheet of a blend thereof with another biological polymer substrate.

A surface to be laminated with a biodegradable resin of such a biological polymer substrate sheet (i.e., a surface onto which an aqueous adhesive is applied) can be subjected to a pre-treatment for improving adhesiveness, such as a corona discharge treatment or application of a primer, but the primer application using an organic solvent should be avoided.

### (Polyglycolic acid resin)

The polyglycolic acid resin (hereinafter sometimes referred to as "PGA resin") used in the present invention includes homopolymer of glycolic acid (including a ring-opening polymerization product of glycolide (GL) that is a bimolecular cyclic ester of glycolic acid) consisting only of glycolic acid recurring unit represented by a formula of: -(-O-CH₂-CO-)- (1), and also a glycolic acid copolymer containing at least 70 wt.% of the above-mentioned glycolic acid recurring unit.

Examples of comonomer providing polyglycolic acid copolymer together with a glycolic acid monomer, such as the above-mentioned glycolide, may include: cyclic monomers, such as ethylene oxalate (i.e., 1,4-dioxane-2,3-dione), lactides, lactones (e.g., β-propiolactone, β-butyrolactone, pivalolactone, γ-butyrolactone, δ-valerolactone, β-methyl-δ-valerolactone, and ε-caprolactone), carbonates (e.g., trimethylene carbonate), ethers (e.g., 1,3-dioxane), either esters (e.g., dioxanone), amides (ε-caprolactam); hydroxycarboxylic acids, such as lactic acid, 3-hydroxypropanoic acid, 3-hydroxybutanoic acid, 4-hydroxybutanoic acid and 6-hydroxycaproic acid, and alkyl esters thereof; substantially equi-molar mixtures of aliphatic diols, such as ethylene glycol and 1,4-butanediol, with aliphatic dicarboxylic acids, such as succinic acid and adipic acid, or alkyl esters thereof; and combinations of two or more species of the above.

The content of the above-mentioned glycolic acid recurring unit in the PGA resin is at least 70 wt.% (up to 100 wt.%), preferably at least 90 wt.% (up to 100 wt.%). If the content is too small, it becomes difficult to attain a gas barrier property-improving effect expected of the PGA resin. Within this extent, the PGA resin may comprise 2 or more species of polyglycolic acid (co-)polymers.

The PGA resin may preferably have a weight-average molecular weight (based on polymethyl methacrylate) in a range of 30,000 - 600,000, more preferably 50,000 - 500,000, further preferably 70,000 - 300,000, according to GPC measurement using hexafluoroisopropanol solvent. If the weight-average molecular weight is too low, the PGA resin layer is liable to be damaged when the multilayer sheet formed by lamination with, e.g., paper, of the present invention is used after bending it into, e.g., a box. Too large a weight-average molecular weight results in an increase in melt viscosity during processing, a liability of coloring or decomposition of the resin or a difficulty in formation of a thin layer of PGA resin, thus a multilayer sheet of a small thickness as a whole.

In order to provide the PGA resin with a practical moisture resistance so as to prevent premature decomposition thereof even during lamination with a layer of aqueous adhesive as described hereinafter, it is preferred to suppress the residual glycolide content of the PGA resin. More specifically, it is preferred that the residual glycolide content is at most 0.8 wt.% (down to almost 0 wt.%), more preferably at most 0.6 wt.%, particularly preferably at most 0.3 wt.%, most preferably at most 0.2 wt.%. In order to obtain a PGA resin with such a small residual glycolide content, it is preferred to adopt a process for producing a PGA resin comprising producing a PGA resin by ring-opening polymerization of glycolide, wherein a latter period of the polymerization is proceeded with by way of solid-phase polymerization, and the resultant PGA resin is subjected to removal of residual glycolide by release to a gaseous phase (See the specification of PCT/JP05/04771). By adjusting the residual glycolide content through such a process, it becomes possible to adjust the biological degradation period of the PGA resin layer in the resultant multilayer sheet and thus the packaging material. Herein, in view of the state of commercial circulation of packaging materials, it is preferred that the shape of the multilayer sheet is not impaired while retaining the PGA resin layer after storage for 2 months in a room temperature environment (23°C, 90% relative humidity).

Separately from the reduction in residual glycolide content or in combination therewith, stretching orientation of molecular chains of the PGA resin is also effective for improving the moisture resistance of the PGA resin layer. The stretching orientation may preferably be performed at a temperature of 25 - 120°C, particularly preferably 40-70°C and at a ratio of at least 2 times, preferably at least 4 times, particularly preferably at least 6 times, most preferably 8 times or more, in terms of a thickness ratio of the PGA resin layer. As a result thereof, PGA molecular chains are tightly oriented to improve the moisture resistance of the PGA resin layer. If the stretching ratio is below 2, the effect is scarcely developed. The upper limit, while it may depend on the stretching conditions and the molecular weight, etc., is generally at most 20 times. Stretching at a ratio in excess of 20 times is liable to cause breakage of the PGA resin layer. The stretching of the PGA resin layer may ordinarily be performed prior to lamination with a biological polymer substrate sheet, but it is sometimes preferred to perform the stretching of the PGA resin layer after lamination with a layer of another biodegradable resin in order to facilitate the stretching at a high ratio. It is preferred to subject the PGA resin layer after stretching to a heat treatment under tension or relaxation condition.

### (Polyglycolic acid resin layer)

The PGA resin layer as an essential component of the multilayer sheet according to the present invention is preferably composed of the above-mentioned polyglycolic acid resin alone but can be formed of a mixture thereof with another biodegradable resin or another thermoplastic resin within an extent of retaining biodegradability as a whole as far as the above-mentioned glycolic acid recurring unit content is at least 70 wt.%, preferably at least 90 wt.%. The above-mentioned content range should be observed since the barrier property is liable to be lowered as the glycolic acid recurring unit content is decreased. A thermal stabilizer, a plasticizer, a lubricant, etc., may be added as desired depending on the purpose thereof, but the amount and species thereof should be adjusted within an extent of not impairing the object of the present invention since the addition can affect the adhesiveness in some cases.

The PGA resin layer may preferably be formed in a thickness in a range of ordinarily ca. 1 µm to 5,000 µm, particularly 10 - 1,000 µm. Too small a thickness is liable to result in shortage of strength and barrier property, and too large a thickness is liable to lead to inferiority in secondary processing, such as bending, of the resultant multilayer sheet.

The barrier property of the polyglycolic acid resin-based multilayer sheet of the present invention is ensured principally by the PGA resin layer, and the composition and thickness of the PGA resin should desirably be determined so as to provide an oxygen permeation rate of at most 8 cc/m²/day/atm when measured at a temperature of 23°C and a relative humidity of 80%, and/or a water vapor permeation rate of at most 25 g/m²/day when measured at a temperature of 40°C and a relative humidity of 90%. The permeation rates are desirably as close to 0 as possible.

### (Aqueous adhesive layer)

The multilayer sheet of the present invention is formed by adhesive lamination of the PGA resin layer onto the biological polymer substrate sheet via an aqueous adhesive layer.

Aqueous adhesives may include an aqueous solution, an aqueous dispersion and a mixture with water, respectively, of an adhesive resin. Specific examples thereof may include: starch paste comprising an aqueous solution of starch, stick paste comprising a kneaded mixture of vinyl-pyrrolidone resin and water, aqueous solutions of vinyl alcohol resins, and aqueous emulsions of ethylene-vinyl acetate copolymer and other vinyl acetate-based resins. Water is removed, e.g., by evaporation from an applied layer of such an aqueous adhesive to dry and solidify the adhesive resin, thereby developing a strong adhesiveness. The use of, particularly, starch paste, stick paste principally comprising a vinyl pyrrolidone resin or liquid paste principally comprising a vinyl alcohol resin, each having biodegradability, is preferred since the entire laminate can be made completely biodegradable thereby. Particularly, starch paste may economically preferably be used because of its inexpensiveness. Such an aqueous adhesive allows lamination at room temperature so that it provides advantages, such as no necessity of a large production facility because of no necessity of a heat-melting equipment, easy repair of the facility and allowability of outdoor lamination operation.

The aqueous adhesive layer may preferably be formed in an application amount of generally 10 - 1,500 g/m², particularly 50 - 500 g/m², based on resin (solid).

Incidentally, in the course of study leading to the present invention, it has been found that solvent-type adhesives of synthetic rubbers such as chloroprene rubber; and chemical reaction-type adhesives of cyanoacrylate-type, two-liquid mixture epoxy resin-type and silicone polymer-type are also effective as an adhesive between natural polymer and PGA although they are not aqueous adhesives, but such organic solvent-type and chemical reaction-type adhesives are liable to evolve odors, require consideration of operation environment, such as provision of local exhaust equipment, etc., and are also liable to pose a sanitation problem in the case of providing packaging containers for food, etc.

In the present invention, it is also possible to use another biodegradable resin in combination with the above-mentioned PGA resin. Particularly, it is possible to use another biodegradable resin layer in lamination with the above-mentioned PGA resin layer. Examples of another biodegradable resin used for such a purpose may include: polyamino acids inclusive of proteins such as gluten and collagen, and polyesteramides (collagen, polyaspartic acid); polyethers (PEG) such as polyalkylene glycols, water-soluble polyhydric alcohol polymers such as polyvinyl alcohol (PVA); poly (α-oxyacids), such as polylactic acid (e.g., "LACEA" made by Mitsui Kagaku K.K.), poly (ω-oxyacids) such as polyhydroxybutyric acid (P3HB) (e.g., "BIOPOL" made by Monsanto Co.), polylactones such as polycapaolactone (e.g., "CELL GREEN" made by Daicel Kagaku Kogyo K.K.), condensates of at least aliphatic dicarboxylic acids such as succinic acid and glycols (e.g., "BIONOLE" made by Showa Kobunshi K.K.; "GS-Pla" made by Mitsubishi Kagaku K.K.; "BIOMAX" made by Dupont Co.); and these polymers can include a carbonate structure as by copolymerization with, e.g., trimethylene carbonate. These can be structured singly or in combination of two or more species. Among these, polyesters, inclusive of: poly (α-oxyacids) such as polylactic acid ("LACEA"), poly (ω-oxyacids) such as polyhydroxybutyric acid (P3HB) ("BIOPOL"), polycapcolactones such as polycaprolactone ("CELL GREEN"), and condensates of at least aliphatic dicarboxylic acids such as succinic acid and glycols ("BIONOLE", "GS-Pla", " BIOMAX"), are preferred.

### (Application of aqueous adhesive, Adhesion and Lamination)

The multilayer sheet of the present invention is formed by adhesive lamination of a biological polymer substrate sheet and a PGA resin layer via an aqueous adhesive layer.

In some case, it is possible to effect the adhesive lamination by the melt lamination method according to co-extrusion of an aqueous adhesive and a PGA resin onto a substrate sheet. In general, however, there is adopted a manner of applying an aqueous adhesive onto one of the biological polymer substrate sheet and the PGA resin layer, and superposing the other onto the applied aqueous adhesive layer, followed by pressing to form a laminate. In case where the adhesive resin is thermoplastic, it is possible to effect a dry lamination method wherein water is completely evaporated from an aqueous adhesive layer formed by application on one of the substrate sheet and the PGA resin layer and the other is hot-pressed onto the (aqueous) adhesive layer thus formed. However, it is preferred to adopt a wet lamination method which allows the lamination at room temperature and does not require excessive heating. As a result thereof, it is possible to prevent the generation of even slight odor which can occur at high temperatures and minimize the thermal history remaining in the biological polymer substrate sheet. Further, it is also possible to suppress the lowering in molecular weight due to hydrolysis of the PGA resin which can be accelerated under heating.

In the wet lamination method, an aqueous solution, an aqueous dispersion or a kneaded mixture with water of an adhesive resin is generally applied onto a biological polymer substrate sheet, and prior to complete evaporation of the water, a PGA resin layer is applied thereto under application of an appropriate pressure (pressing) as desired to complete the evaporation of the water, thereby forming the multilayer sheet of the present invention. According to necessity, it is also possible apply the PGA resin layer after lamination thereof with another biodegradable resin layer, or laminate another biodegradable resin after laminating the PGA resin layer onto the substrate sheet.

The application of an aqueous adhesive is performed at a temperature where water is not readily evaporated, more specifically at temperature not exceeding 80°C, preferably a temperature not exceeding 60°C, particularly preferably a temperature not exceeding 45°C. The lower limit is a temperature at which the adhesive is frozen or becomes excessively viscous to make the application difficult, which is preferably not below about - 30°C, more preferably not below - 10 °C, while it can differ depending on the species and concentration of the adhesive. Similar temperature ranges are appropriately selected as a drying temperature for subsequent evaporation of the water.

The thus-obtained multilayer sheet of the present invention basically has a structure comprising a biological polymer substrate sheet and a PGA resin layer adhesively laminated to each other with an aqueous adhesive but can optionally include a biodegradable resin layer, so that its layer structure can be versatile to some extent. For example, if a biological polymer substrate sheet is denoted by P, an aqueous adhesive layer is denoted by S, a PGA resin layer is denoted by G and another biodegradable resin layer is denoted by B, the representative laminate structures thereof may include: P/S/G, P/S/G/B, P/S/B/G/B, G/S/P/S/G, etc. It is also possible to include a printing layer or a hot adhesive layer comprising another biodegradable resin as desired within an extent of not impairing the biodegradability as a whole. A step of lamination with such a hot adhesive is performed prior to adhesive lamination of P (biological polymer substrate sheet) and G (PGA resin layer) with S (aqueous adhesive layer) or, in the case of after the lamination, after evaporation from the S layer.

The thus-formed multilayer sheet of the present invention is preferably used as a food container-forming material for an oily food or beverages, etc., for which degradation by oxidation should be avoided, or dry food which is likely to denaturate by moisture adsorption, since the polyglycolic acid resin layer contained therein has excellent gas-barrier property (at least 3 times that of EVOH, which is a typical gas-barrier resin) and excellent water vapor-barrier property.

### EXAMPLES

Hereinbelow, the present invention will be described more specifically based on Examples and Comparative Examples. Physical properties described in the description including Examples below are based on measured values according to the following methods.

(1) Glycolide content Ca. 300 mg of a sample PGA resin is dissolved in ca. 6 g of dimethyl sulfoxide (DMSO) under heating at 150°C for ca. 10 min., followed by cooling to room temperature and filtration. To the filtrate liquid, prescribed amounts of acetone and 4 - chlorobenzophenone as the internal standard are added. Then, 2 µl of the solution is injected into a GC apparatus. From values obtained in the measurement, a glycolide content (wt.% in the polymer) is calculated. The GC analysis conditions are as follows:

Apparatus: "GC-2010" made by K.K. Shimadzu Seisakusho. Column: "TC-17" (0.25 mm in diameter x 30 mm in length).
Column temperature: Held at 150°C for 5 min., heated at 270°C at a rate of 20°C/min. and then held at 270°C for 3 min.
Gasification chamber temperature: 180°C
Detector: FID (hydrogen flame ionization detector) at 300°C.

### (2) Molecular weight measurement.

A sample PGA resin is rendered into an amorphous polymer so as to be dissolved in a solvent used for molecular weight measurement. More specifically, ca. 5 g of a sufficiently dried sample PGA resin is sandwiched between aluminum sheets and heated for 90 sec. on a heat press machine at 275°C and held for 1 min. under a pressure of 2 MPa. Then the sample is dissolved in hexafluoroisopropanol, and subjected to GPC measurement to determine a weight-average molecular weight (Mw) based on polymethyl methacrylate as the standard.

### (3) Oxygen permeation constant

An oxygen permeability meter ("MOCON OX-TRAN 2/20" made by Modern Control Co.) was used to measure an oxygen permeation constant under the conditions of 23°C and 80%-relative humidity according to JIS K7126 (constant-pressure method).

### (4) Water vapor permeability

Measured according to JIS K7129 under the conditions of 40°C and 90% relative humidity.

### (Preparation of PGA resin film and sheet samples)

### <Samples 1 - 2>

Polyglycolic acid homopolymers (made by Kureha Corporation) having weight-average molecular weights (Mw) and residual glycolide contents (wt.%) shown in Table 1 below were heat-melted at 275°C and formed into 150 µm-thick amorphous single-layer sheets, which were respectively biaxially stretched at 60°C by inflation at a stretching ratio of 10 times to obtain PGA single-layered films each having a thickness of 15 µm.

### <Samples 3 - 6>

Polyglycolic acid homopolymers (made by Kureha Corporation) having weight-average molecular weights (Mw) and residual glycolide contents (wt.%) shown in Table 1 below were heat-melted at 275°C and formed into 150 µm-thick amorphous single-layer sheets.

### <Sample 7>

A 100 µm-thick PGA single-layer amorphous sheet was prepared in a similar manner as Sample 3 except for its thickness.

**[Table 1]**

| Sample | Weight-average molecular weight (Mw)t | Residual glycolide content (wt.%) | Thickness (µm) |
|---|---|---|---|
| 1 | 160000 | 0.24 | 15 |
| 2 | 160000 | 0.52 | 15 |
| 3 | 180000 | 0.05 | 150 |
| 4 | 220000 | 0.17 | 150 |
| 5 | 170000 | 1.02 | 150 |
| 6 | 35000 | 0.16 | 150 |
| 7 | 180000 | 0.05 | 100 |

### (Examples 1-6)

One surface except for a portion of each of the above-mentioned PGA single layer films or sheets of the above-mentioned Samples 1 - 6 was coated with a starch-based aqueous paste ("YAMATO NORI", made by Yamato K.K.) at a rate of 25 mg/cm² and was superposed onto a copying paper ("BRIGHT RECYCLE A4", made by Fuji Xerox Office Supply K.K.; basis weight = 67 g/m²), followed by 5 min. of pressing at a pressure of 1 kg/cm² and 2 hours of drying to form a multilayer sheet. The adhesion operation could be performed in an ordinary operation environment without odor, etc., at all. After the drying, the multilayer sheets were confirmed to be free from damage even after bending at 90 degrees except for the multilayer sheet prepared from Sample 5 caused damage in its PGA layer in some cases. The portion of the paper contacting the portion of the PGA not coated with the adhesive of each of Samples 1 - 6 was bent at 180 degrees to peel the reset of the paper, whereby the state after the peeling resulted in a breakage of the paper material showing a complete adhesion.

The multilayer sheets were stored in an environment of 23°C and 90%-relative humidity for 2 months and observed with respect to their shape, whereby each of the multilayer sheets prepared from Samples 1 - 4 was tough so as to retain the shape of the PGA layer even after bending at 90 degrees.

The multilayer sheet prepared from Sample 5 caused cracking of the PGA layer when the bending of the multilayer sheet at 90 degrees was tried.

### (Examples 7 - 11)

Several 100 µm-thick PGA single-layer sheets of Sample 7 were used to prepare multilayer sheets in the same manner as in Example 1 with various grades of commercially available, ordinary home-use aqueous adhesives. As a result, the multilayer sheets prepared with the respective adhesives were confirmed to be free from damage after bending at 90 degrees. The states in the adhesion operation and the states of peeling after bending at 180 degrees of a portion of the paper contacting the portion of the PGA sheets not coated with the adhesive, were respectively as follows.

Starch-based aqueous adhesive ("YAMATO NORI", made by Yamato K.K.)
The adhesion operation was performed in an ordinary operation condition without odor, etc., at all. The adhesion was so complete as to cause breakage of the paper material.

Polyvinyl pyrrolidone-based aqueous stick paste ("PRITT STICK" made by Kokuyo K.K.)
The adhesion operation was performed in an ordinary operation condition without odor, etc., at all. The adhesion was so complete as to cause breakage of the paper material.

Polyvinyl alcohol-based aqueous liquid paste ("CLEAN GLUE ", made by Kokuyo K.K.)
The adhesion operation was performed in an ordinary operation condition without odor, etc., at all. The adhesion was so complete as to cause breakage of the paper material.

Vinyl acetate resin-based aqueous emulsion-type adhesive "BOND MOKKOU-YOU (for wood work)", made by Cemedine Co.)
The adhesion operation was performed in an ordinary operation condition without odor, etc., at all. The adhesion was so complete as to cause breakage of the paper material.

Ethylene-vinyl acetate resin-based aqueous emulsion-type adhesive ("BOND KOUSAKUATSUGAMI YOU (for handiwork board paper)", made by Konishi K.K.)
The adhesion operation was performed in an ordinary operation condition without odor, etc., at all. The adhesion was so complete as to cause breakage of the paper material.

### (Comparative Examples 1 - 3)

Several 100 µm-thick PGA single-layer sheets of Sample 7 were used to prepare multilayer sheets in the same manner as in Example 1 with various grades of commercially available, ordinary home-use nonaqueous adhesive. As a result, the multilayer sheets prepared with the respective adhesives were confirmed to be free from damage after bending at 90 degrees. The states in the adhesion operation and the states of peeling after bending at 180 degrees of a portion of the paper contacting the portion of the PGA sheets not coated with the adhesive, were respectively as follows.

Cyanoacrylate-based chemical reaction-type adhesive ("ALLON ALPHA", made by Konishi K.K.)
Odor occurred during the operation, and the operation required local ventilation facility. A portion of the paper caused material breakage, but most of the adhesive penetrated into the paper.

Cellulose-polyvinyl acetate-organic solvent-type adhesive ("CEMEDINE C", made by Cemedine Co.)
Odor occurred during the operation, and the operation required local ventilation facility. Peeling occurred at the boundary between the PGA sheet and the adhesive.

Silicone resin-based chemical reaction-type adhesive ("SUPER X-2", made by Cemedine Co.)
Odor occurred during the operation, and the operation required local ventilation facility. The adhesive layer caused cohesion breakage, thus showing weak adhesive strength.

### (Examples 12 - 14)

Several 100 µm-thick PGA single-layer sheets of Sample 7 were used to prepare multilayer sheets in the same manner as in Example 1 with various grades of commercially available ordinary home-use aqueous adhesives except that a coated paper (an outer-side portion of a casing box of "KIMWIPE WIPER S-200", made by Crecia K.K.) was used as an adhesion surface of the substrate sheet. As a result, the multilayer sheets prepared with the respective adhesives were confirmed to be free from damage after bending at 90 degrees. The states in the adhesion operation and the states of peeling after bending at 180 degrees of a portion of the paper contacting the portion of the PGA sheets not coated with the adhesive, were respectively as follows.

Starch-based aqueous adhesive ("YAMATO NORI", made by Yamato K.K.)
The adhesion operation was performed in an ordinary operation condition without odor, etc., at all. The adhesion was so complete as to cause breakage of the paper material.

Polyvinyl pyrrolidone-based aqueous stick paste ("PRITT STICK" made by Kokuyo K.K.)
The adhesion operation was performed in an ordinary operation condition without odor, etc., at all. The adhesion was so complete as to cause breakage of the paper material.

Polyvinyl alcohol-based aqueous liquid paste ("CLEAN GLUE ", made by Kokuyo K.K.)
The adhesion operation was performed in an ordinary operation condition without odor, etc., at all. The adhesion was so complete as to cause breakage of the paper material.

### (Examples 15 - 17)

Several 100 µm-thick PGA single-layer sheets of Sample 7 were used to prepare multilayer sheets in the same manner as in Example 1 with various grades of commercially available ordinary home-use aqueous adhesives except that a non-coated paper (an inner-side portion of a casing box of "KIMWIPE WIPER S-200", made by Crecia K.K.) was used as an adhesion surface of the substrate sheet. As a result, the multilayer sheets prepared with the respective adhesives were confirmed to be free from damage after bending at 90 degrees.
The states in the adhesion operation and the states of peeling after bending at 180 degrees of a portion of the paper contacting the portion of the PGA sheets not coated with the adhesive, were respectively as follows.

Starch-based aqueous adhesive ("YAMATO NORI", made by Yamato K.K.)
The adhesion operation was performed in an ordinary operation condition without odor, etc., at all. The adhesion was so complete as to cause breakage of the paper material.

Polyvinylpyrrolidone-based aqueous stick paste ("PRITT STICK" made by Kokuyo K.K.)
The adhesion operation was performed in an ordinary operation condition without odor, etc., at all. The adhesion was so complete as to cause breakage of the paper material.

Polyvinyl alcohol-based aqueous liquid paste ("CLEAN GLUE", made by Kokuyo K.K.)
The adhesion operation was performed in an ordinary operation condition without odor, etc., at all. The adhesion was so complete as to cause breakage of the paper material.

### (Reference Example 1)

Two 100 µm-thick PGA single-layer sheets of Sample 7 were coated with a starch-based aqueous paste ("YAMATO NORI", made by Yamato K.K.) at a rate of 25 mg/cm² and applied to each other under a pressure of 1 kg/cm², followed by 2 hours of drying to form a laminate sheet. After the drying, the laminate sheet was bent at 90 degrees and found to be free from damage as a result thereof. Further, a portion free from coating with the adhesive of one PGA sheet was gripped and peeled apart from the other, whereby the following states were observed.

Peeling at 0 deg. (horizontal direction): Strong adhesion.
Peeling at 90 deg. (vertical direction): Some peeling occurred at a strong force.
Peeling at 180 deg. (horizontal direction after turning over): Strong adhesion but peeling occurred gradually.

It is understood that in the above case where the adhesive layer was covered with both sides of PGA layers showing water vapor barrier property, complete drying of the aqueous adhesive required a substantial time, so that a strong adhesion was not attained.

### (Test Examples of Decomposability and Recoverability of paper)

The multilayer sheets of Examples 1 - 5 were immersed in 3 normal-caustic soda aqueous solution at 80°C and held under heating for 60 min. The respective multilayer sheets rendered into paper alone, which was recovered as paper. The recovered paper could be easily torn. Further, one sheet each of the multilayer sheets was embedded in earth in a non-overlapping open state and was inspected to be recovered after 12 months, whereas the entirety thereof including the paper portion had disappeared.

### (Reference Examples 2 - 5)

Multilayer sheets were prepared in the same manner as in Examples 7 - 11 except that 100 µm-thick sheets of polylactic acid ("LACEA", made by Mitsui Kagaku K.K.) were used instead of 100 µm-thick PGA sheets of Sample 7. After the drying, a portion of the paper contacting the portion not coated with the adhesive of the PLA sheet was bent at 180 degrees and peeled apart, whereby the following states were observed.

Starch-based aqueous paste ("YAMATO NORI", made by Yamato K.K.)
A portion of the paper caused material breakage, and another portion caused peeling at the boundary between the PLA sheet and the adhesive layer, thus showing insufficient adhesiveness.

Polyvinyl alcohol-based aqueous liquid paste ("CLEAN GLUE", made by Kokuyo K.K.)
Peeling occurred at the boundary between the PLA sheet and the adhesive layer, thus failing to show adhesiveness at all.

Vinyl acetate resin-based aqueous emulsion-type adhesive ("BOND MOKKOU-YOU (for wood work)", made by Cemedine Co.)
A portion of the paper caused material breakage, and another portion caused peeling at the boundary between the PLA sheet and the adhesive layer, thus showing insufficient adhesiveness.

### <Test Example of Gas-barrier property>

The laminate sheet (i.e., a laminate sheet formed by adhesion of a PGA film of Sample 1 and a copying paper with a starch-based aqueous paste) was subjected to measurement of an oxygen permeability and a water vapor permeability while placing the PGA film side as the high oxygen or the high water vapor side, whereby the results of 2.7 cc/m²/day.atm and 12.4 g/m²/day were obtained, respectively.

For comparison, a laminate sheet obtained in a layer structure similar as in Reference Example 2 except for using a 25 µm-thick film of polylactic acid (PLA) ("LACEA", made by Mitsui Kagaku) instead of the 100 µm-thick PGA film was subjected to measurement of an oxygen permeability and a water vapor permeability while placing the PLA film side as the high oxygen or the high water vapor side, whereby the results of 570 cc/m²/day.atm and 34.2 g/m²/day were obtained, respectively.

### [INDUSTRIAL APPLICABILITY]

As described above, according to the present invention, there is provide a polyglycolic acid resin-based multilayer sheet formed by adhesive lamination of a polyglycolic acid resin layer that shows excellent barrier property in addition to biodegradability onto a biological polymer substrate sheet, such as paper, via an aqueous adhesive. The multilayer sheet allows recovery of paper alone by preferential decomposition of the resin or exhibits biodegradability as a whole in spite of excellent barrier property, thus being extremely suitable for formation of, e.g., a packaging material, such as a food container.

## Claims

1. A polyglycolic acid resin-based multilayer sheet, comprising a biological polymer substrate sheet and a polyglycolic acid resin layer laminated with each other via an aqueous adhesive layer.

2. A multilayer sheet according to Claim 1, wherein the aqueous adhesive layer comprises an application layer of an aqueous solution, an aqueous dispersion or a kneaded mixture with water, of an adhesive resin.

3. A multilayer sheet according to Claim 2, wherein the adhesive resin principally comprises any one of starch, polyvinylpyrrolidone resin and vinyl alcohol resin.

4. A multilayer sheet according to any one of Claims 1 - 3, wherein the biological polymer substrate sheet comprises a biological polymer selected from celluloses, starches, polysaccharides having a glucose structure as a basic skeleton including chitins, and lignins.

5. A multilayer sheet according to Claim 4, wherein the biological polymer substrate sheet comprises paper.

6. A multilayer sheet according to any one of Claims 1 - 5, further including a layer of a biodegradable resin other than polyglycolic acid resin.

7. A multilayer sheet according to any one of Claims 1 - 6, wherein the polyglycolic acid resin comprises a polyglycolic acid (co-)polymer including at least 70 wt.% of - O CH₂ CO - recurring unit.

8. A multilayer sheet according to Claim 7 or 8, wherein the polyglycolic acid resin has a molecular weight (Mw) of 30,000 - 600,000.

9. A multilayer sheet according to Claim 7 or 8, wherein the polyglycolic acid resin has a residual glycolide content of at most 0.8 wt.%.

10. A multilayer sheet according to any one of Claims 7 - 10, wherein the polyglycolic acid resin layer has been stretch-oriented.

11. A multilayer sheet according to any one of Claims 1 - 10, showing an oxygen permeation constant of at most 8 cc/m²/day/atm as measured at a temperature of 23°C and a relative humidity of 80%.

12. A multilayer sheet according to any one of Claims 1 - 11, showing a water vapor permeability of at most 25 g/m²/day.

13. A packaging container comprising a multilayer sheet according to any one of Claims 1 - 12.
